# EUROPÄISCHE PATENTANMELDUNG

(11) **EP 0 591 815 A1**
(43) Veröffentlichungstag der Anmeldung: **13.04.1994**
(21) Anmeldenummer: 93115599.8
(22) Anmeldetag: 28.09.1993
(51) Int. Cl.: C09D 5/24, C09D 7/00

(54) **Oberflächenbeschichtungen mit reduziertem Oberflächenwiderstand**

(30) Priorität: 03.10.1992 DE 4233298
(71) Anmelder: RÖHM GMBH, D-64293 Darmstadt (DE)
(72) Erfinder: Fölsch, Karl Josef, Dr., D-55128 Mainz (DE); Daum, Helmut, D-64342 Seeheim-Jugenheim (DE); Tessmer, Dieter, D-65428 Rüsselsheim (DE); Trabitzsch, Hans, Dr., D-64342 Seeheim-Jugenheim (DE); Wetzig, Hanna, D-64409 Messel (DE)

(57) **Zusammenfassung**

Die Erfindung betrifft wäßrige Dispersionsmischungen M) für Oberflächenbeschichtungen bestehend aus 100 Gew.-Teilen einer wäßrigen Kunststoff-Dispersion A) mit einem Feststoff-gehalt von bis zu 60 Gew.-%, deren Latexteilchen eine dynamische Glasübergangstemperatur von weniger als 70 Grad C aufweisen, aus 10 bis 50 Gew.-Teilen einer wäßrigen Dispersion B) enthaltend bis zu 50 Gew.-% Leitfähigkeits-Ruß und/oder Graphit, aus 0,1 bis 50 Gew.-Teilen eines Verdickungsmittels C) auf Poly(meth)acrylat-Basis, sowie aus 0 bis 500 Gew.-Teilen an Füllstoffen D), dadurch gekennzeichnet, daß das Verdickungsmittel C) aus einer alkalisch verdickbaren wäßrigen Dispersion eines Copolymerisats PC) mit einem Feststoffgehalt von bis zu 60 Gew.-% besteht, wobei PC) aufgebaut ist aus:
pc1) 9,9 bis 79,9 Gew.-% eines Alkylacrylats und/oder eines Alkylmethacrylats mit 1 bis 8 Kohlenstoffatomen im Alkylrest,
pc2) 10 bis 90 Gew.-% Acrylsäure und/oder Methacrylsäure, sowie
pc3) 0,1 bis 10 Gew.-% eines Acrylsäure- und/oder Methacrylsäureesters eines alkoxylierten Alkyl-, Aryl- und/oder Aralkylalkohols,
wobei sich die Comonomeren pc1), pc2) und pc3) zu 100 Gew.-% ergänzen, und daß die Oberflächenbeschichtungen einen Oberflächenwiderstand von weniger als 10⁷ Ohm, bestimmt nach DIN VDE 0303 (Teil 5), aufweisen.

## Beschreibung

### Gebiet der Erfindung

Die Erfindung betrifft Dispersionsmischungen M) für Oberflächenbeschichtungen mit einem Oberflächenwiderstand von weniger als 10⁷ Ohm (nach DIN VDE 0303, Teil 5). Die Oberflächenbeschichtungen basieren auf Gemischen M) wäßriger Dispersionen, enthaltend Latexteilchen, die eine Mindestfilmbildetemperatur von weniger als 70 Grad C aufweisen, Leitfähigkeits-Ruß, Verdickungsmittel, die aus Polymerisaten, enthaltend langkettige alkoxylierte Ester der Acrylsäure und/oder der Methacrylsäure, bestehen, sowie gegebenenfalls weitere Füllstoffe.

### Stand der Technik

Der Einsatz von Verdickungsmitteln zur Erhöhung der Viskosität von Lösungen oder von Dispersionen ist bekannt. Verdickungsmittel sind meist hochmolekulare Polymerisate mit hydrophilen Gruppen, wie beispielsweise Polymerisate auf Basis Acryl- oder Methacrylsäure oder deren Salze. Solche polymeren Carbonsäuren bzw. deren Salze zeigen erst ab mittleren Molekulargewichten Mw > 10⁶ Dalton die vorgesehene verdickende Wirkung.
Bei einer anderen Klasse von polymeren Verdickungsmitteln beruht die Verdickerwirkung nicht auf dem extrem hohen Molekulargewicht der Polymeren, sondern auf der Assoziation der Makromoleküle über eingebaute Monomereinheiten mit langkettigen, aliphatischen Seitengruppen.

So werden beispielsweise Emulsionscopolymerisate auf Ethylacrylat-Basis enthaltend als weitere Monomereinheiten ungesättigte Carbonsäuren und (Meth)acrylester von Polyglykoletheralkoholen, die als endständigen Esterrest Alkyl- oder Aralkylgruppen aufweisen, als effektive Verdickungsmittel in EP-Patent 11 806 (= US-Patente 4 384 064, 4 480 655) beschrieben.
EP-Patent 13 836 (= US-Patent 4 444 749) beschreibt Dispersionen, enthaltend Polymerisate mit Verdickerwirkung, die aus Alkyl(meth)acrylaten mit C1- bis C4-Alkylresten, (Meth)acrylsäure, (Meth)acrylestern von Polyglykoletheralkoholen mit endständigen Alkyl- oder Aralkylgruppen sowie gegebenenfalls einem vernetzenden Comonomeren aufgebaut sind. Gegebenenfalls kann die Verdickungswirkung durch die Auswahl bestimmter Emulgatoren erhöht werden. Die mit alkalischer Base zumindestens teilneutralisierten Copolymerisate werden zur Verdickung wäßriger Systeme, wie Dispersionsfarben, Kosmetika, Lebensmittel, Farbpasten für Textilien, Pharmazeutika sowie ionischer Detergentien eingesetzt.

In US-Patent 4 421 901 werden Verdickungsmittel mit verbesserter Wirksamkeitstoleranz gegenüber ionischen oder Eletrolytzusätzen beansprucht, bestehend aus wäßrigen Dispersionen von Copolymerisaten, aufgebaut aus 10 bis 70 Gew.-% (Meth)acrylsäure, wenigstens 25 Gew.-% Alkyl(meth)-acrylaten mit C1- bis C4-Alkylresten, 0,5 bis 25 Gew.-% eines Alkylpolyoxyethylenpolycarbonyloxyethylenacrylats sowie gegebenenfalls 0,05 bis 1 Gew.-% eines Vernetzers.

CA-Patent 1 097 539 beschreibt transparente, elektrisch leitfähige Laminate, bestehend aus einem transparenten Polymerisat, einer Verbindungsschicht enthaltend ein Verdickungsmittel aus einem Copolymerisat, aufgebaut aus Ethylacrylat, Methacrylsäure und Methylmethacrylat, sowie einer Metallschicht. Solche Laminate weisen einen niedrigen Oberflächenwiderstand und eine ausgezeichnete Haftung zwischen Substrat (transparentes Polymerisat) und Metallschicht auf.
In Japan. Kokai JP 50 12 46 42 wird ein elektrostatisches Aufzeichnungsmaterial beschrieben, das ein alkalisch verdickbares Beschichtungsmittel für Papier enthält, bestehend aus einer wäßrigen Dispersion, enthaltend ein Polymerisat, aufgebaut aus carboxylgruppenhaltigen Monomereinheiten, Vinylaromaten und diolefinischen Monomereinheiten mit konjugierten Doppelbindungen. Das Aufzeichnungsmaterial enthält weiterhin Polyvinylbenzyltrimethylammoniumchlorid und weist in feuchter Atmosphäre einen relativ geringen Oberflächenwiderstand auf.
EP-A 248 602 (= US-Patent 4 888 134) beansprucht eine Methode zur Herstellung elektrisch leitfähiger Schäume mit einem Oberflächenwiderstand von höchstens 9,9 x 10¹⁰ Ohm (gemessen nach DIN 53 345) basierend auf einem Gemisch aus einem Latex eines gummiartigen Polymerisats, bestimmten Füllstoffen, Vulkanisiermittel, gegebenenfalls Geliermittel, Verdickungsmittel sowie eine durch Emulgatoren stabilisierte Dispersion von Leitfähigkeits-Ruß. Das Verdickungsmittel ist speziell auf die Schäumbedingungen abgestimmt und ist beispielsgemäß eine teilneutralisierte Polyacrylsäure. Die erfindungsgemäßen Schäume werden als antistatische Teppichrückenbeschichtungen eingesetzt.

### Aufgabe und Lösung

Für die Oberflächenbeschichtung, insbesondere von strukturierten Materialien, wie beispielsweise Fasern, Gewebe, Mauerwerk, Holz und geprägten Werkstoffen, sind Beschichtungsmittel mit einer bestimmten Mindestviskosität notwendig, wodurch die Streichfähigkeit verbessert und das Abtropfen der Beschichtungsmittel nach dem Auftrag verhindert werden sollen. Gleichzeitig wird an solche Oberflächenbeschichtungen oft die Anforderung antistatischer Wirkung gestellt, das bedeutet, daß die Beschichtungen möglichst geringe Oberflächenwiderstände aufweisen sollen. Dies ist insbesondere bei Beschichtungen von Fasern und Geweben der Fall.
Die in EP-Patent 11 806, EP-A 13 836 sowie US-Patent 4 421 902 beschriebenen assoziativen Verdickungsmittel sind zwar zur Einstellung der gewünschten Viskosität bei den zur Beschichtung verwendeten Dispersionen geeignet, der Oberflächenwiderstand solchermaßen beschichteter Substrate wird jedoch nicht oder kaum reduziert.

CA-Patent 1 097 539, Jpn. Kokai JP 50 12 46 42 sowie EP-A 248 602 beschreiben Beschichtungsmaterialien, die die Reduzierung des Oberflächenwiderstands der beschichteten Substrate zum Ziel haben, für die Beschichtung strukturierter Materialien jedoch weitestgehend ungeeignet sind. Lediglich die in EP-A 248 602 beschriebenen Schäume können für die Beschichtung o.g. Materialien eingesetzt werden, jedoch erfordert die Herstellung und das anschließende Laminieren der Schäume aufwendige Verfahrensschritte und Rezepturen bei der Schaumherstellung.

Daraus resultiert die Aufgabe, Beschichtungen auf Dispersionsbasis bereitzustellen, mit denen Oberflächenbeschichtungen auf insbesondere strukturierten Materialien realisiert werden können, die sich durch geringen Oberflächenwiderstand und durch einfache Auftrageverfahren auszeichnen.

Gelöst wird diese Aufgabe überraschend durch die Verwendung von wäßrigen Dispersionsmischungen M), bestehend aus 100 Gew.-Teilen einer wäßrigen Kunststoff-Dispersion A) mit einem Feststoffgehalt von 5 bis zu 60 Gew.-%, deren Latexteilchen eine dynamische Glasübergangstemperatur von weniger als 70 Grad C aufweisen, aus 10 bis 50 Gew.-Teilen einer wäßrigen Dispersion B), enthaltend bis 1 zu 50 Gew.-% Leitfähigkeits-Ruß und/oder Graphit, aus 0,1 bis 50 Gew.-Teilen eines Verdickungsmittels C) auf Polyacrylat-Basis sowie gegebenenfalls aus 5 bis zu 500 Gew.-Teilen an Füllstoffen D), dadurch gekennzeichnet, daß das Verdickungsmittel C) aus einer alkalisch verdickbaren wäßrigen Dispersion eines Copolymerisats PC) mit einem Feststoffgehalt von 1 bis zu 60 Gew.-% erhalten wird, wobei PC) aufgebaut ist aus:
pc1) 9,9 bis 79,9 Gew.-% eines Alkylacrylats und/oder eines Alkylmethacrylats mit 1 bis 8 Kohlenstoffatomen im Alkylrest,
pc2) 10 bis 90 Gew.-% Acrylsäure und/oder Methacrylsäure, sowie
pc3) 0,1 bis 10 Gew.-% eines Acrylsäure- und/oder Methacrylsäureesters der allgemeinen Formel I 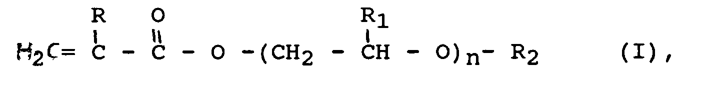 worin
   - R und R₁: für Wasserstoff oder Methyl, R₂ für C8- bis C20-Alkylreste oder für Aryl- bzw. Aralkylreste mit 6 bis 30 C-Atomen, wobei die Alkylreste auch perfluoriert oder teilweise fluoriert sein können,
   sowie n für eine ganze Zahl zwischen 1 und 50 stehen.

Die Dispersionsmischungen M) sind lagerstabil, wobei die Dispersion B), die den Leitfähigkeits-Ruß enthält, überraschenderweise ohne Koagulation des dispergierten Leitfähigkeits-Ruß mit den weiteren Komponenten mischbar ist. Die mit den erfindungsgemäßen Dispersionsmischungen M) beschichteten Oberflächen der strukturierten Materialien weisen Oberflächenwiderstände von weniger als 10⁷ Ohm nach DIN VDE 0303 (Teil 5) auf.

### Durchführung der Erfindung

### Die wäßrigen Dispersionen A)

Die die Latexteilchen der wäßrigen Kunststoff-Dispersion A) aufbauenden Polymerisate weisen dynamische Glasübergangstemperaturen von weniger als 70 Grad C, bevorzugt von weniger als 40 Grad C auf. Die dynamische Glastemperatur wird auch als Tg (dyn) - bzw. als Tλ(max)-Wert bezeichnet und kann an einem Film des Polymerisats im Torsionsschwingungsversuch nach DIN 53 445 bestimmt werden. Der Anteil der Latexteilchen an Dispersion A) kann 5 bis zu 60 Gew.-% ausmachen.
Am Aufbau der Polymerisate können beispielsweise folgende Monomereinheiten einzeln oder zu mehreren beteiligt sein: Styrol, substituierte, insbesondere alkylsubstituierte Styrole, wie beispielsweise α-Methylstyrol oder p-Methylstyrol, Vinylhalogenide wie Vinylchlorid oder Vinylfluorid, Vinylidenhalogenide, Ethylen, Propylen, Isobutylen, Vinylacetat, Butadien sowie weitere konjugierte Diolefine, Isopren, Ester der Acryl- und der Methacrylsäure wie beispielsweise Methylacrylat, Methylmethacrylat, Ethylacrylat, Ethylmethacrylat, Butylacrylat, Butylmethacrylat, Hexylacrylat, Hexylmethacrylat, 2-Ethylhexyl(meth)acrylat, Octyl(meth)acrylat, Decyl-(meth)acrylat, wobei insbesondere (Meth)acrylsäureester mit C2- bis C10-Alkylresten zum Einsatz kommen. Die Monomereinheiten können für sich oder mit weiteren Comonomereinheiten die die Latexteilchen bildenden Polymerisate aufbauen. Desweiteren können vernetzende Comonomere in den üblichen geringen Mengen, z.B. 0,01 bis 5 Gew.-% bezogen auf die gesamten Monomeren mit zwei oder mehr ethylenisch ungesättigten, radikalisch polymerisierbaren Einheiten wie beispielsweise Vinyl(meth)acrylate, Dioldi(meth)acrylate, wie beispielsweise Ethylenglykoldi(meth)acrylat oder 1,4-Butandioldi(meth)acrylat, Methylenbis(meth)acrylamid, Trimethylolpropandi(meth)acrylat, Trimethylolpropantri-(meth)acrylat, Pentaerythrittetra(meth)acrylat, Divinylbenzol, Diallylphthalat oder 1,4-Butandioldivinylether, sowie Pfropfvernetzer mit zwei polymerisierbaren Gruppen unterschiedlicher Reaktivität, bevorzugt radikalisch aktivierbaren C=C-Doppelbindungen, wie beispielsweise Triallylcyanurat oder insbesondere Allyl(meth)acrylat mitverwendet werden.
Als weitere Comonomere können, wenn erwünscht, beispielsweise (Meth)acrylamid, deren N-Alkylderivate, Methylolverbindungen und Methylolalkylverbindungen, Hydroxylalkylester der (Meth)acrylsäure, sowie ethylenisch ungesättigte, radikalisch polymerisierbare Carbonsäuren, wie beispielsweise (Meth)acryl-, Malein-, Fumar- oder Itaconsäure sowie die Ester der malein-, Fumar- oder Itaconsäure, in Mengen von 1 bis zu 20 Gew.-% bezogen auf das Gesamtgewicht der Monomeren mitverwendet werden. Desweiteren können die Latexteilchen einen zwei- oder mehrphasigen Aufbau aufweisen, wie beispielsweise in EP-A 376 096 beschrieben, wobei das Kernmaterial vorzugsweise 5 bis 45 Gew.-% und das Schalenmaterial 55 bis 95 Gew.-% des gesamten Emulsionspolymerisats ausmacht. Das Schalenmaterial besitzt hierbei eine dynamische Glasübergangstemperatur von weniger als 70 Grad C, vorzugsweise von weniger als 40 Grad C. Das Kernmaterial weist demgegenüber eine dynamische Glasübergangstemperatur von über 80 Grad C, vorzugsweise von über 90 Grad C auf. Vorzugsweise sind solche Kunststoffdispersionen sowohl im Kernmaterial als auch im Schalenmaterial überwiegend, insbesondere zu 70 bis 100 Gew.-%, aus Alkylestern der Acryl- und/oder der Methacrylsäure, aus Acryl- und/oder Methacrylnitril sowie aus Styrol und/oder α-Methylstyrol aufgebaut. Selbstvernetzende Typen dieser Dispersionen können im Schalenmaterial etwa 1 bis 10 Gew.-% an Methylol(meth)acrylamid oder deren Alkylethern gegebenenfalls zusammen mit (Meth)acrylamid enthalten. Das mittlere Molekulargewicht Mw des Kernpolymerisats liegt, sofern es unvernetzt ist, über 10⁴ Dalton, vorzugsweise zwischen 10⁵ und 10⁶ Dalton, das des Schalenpolymerisats über 10⁴ Dalton, vorzugsweise zwischen 5 x 10⁴ und 5 x 10⁵ Dalton (zur Bestimmung von Mw mittels Gelpermeationschromatographie vgl. beispielsweise H.F. Mark et al., Encyclopedia of Polymer Science & Technology, Vol., 10, Seiten 1 bis 19, J. Wiley, 1987).
Besonders bevorzugt sind die Latexteilchen der wäßrigen Dispersion A) aus Copolymerisaten aus Styrol und Butadien aufgebaut, die vorzugsweise dynamische Glasübergangstemperaturen von weniger als 40 Grad C aufweisen. Im allgemeinen liegen die Gewichtsverhältnisse von Styrol : Butadien zwischen 80 : 20 und 20 : 80, bevorzugt zwischen 20 : 80 und 50 : 50. Über die Copolymerisate aus Styrol und Butadien hinaus können in den Latexteilchen noch Anteile an reinem Polystyrol vorhanden sein. Zur Herstellung und Spezifikation von wäßrigen Dispersionen A) enthaltend Latexteilchen, bestehend aus Styrol und Butadien, vgl. beispielsweise Kirk-Othmer, Encyclopedia of Chemical Technology, 3rd. Ed., Vol. 8, Seiten 608 bis 625, J. Wiley, 1979. Desweiteren können alle handelsüblichen Bindemittel, die aus Polymerisaten, die dynamische Glasübergangstemperaturen von weniger als 70 Grad C, bevorzugt von weniger als 40 Grad C aufweisen, bestehen, als Komponente A) eingesetzt werden.

### Die Dispersionen B) enthaltend Leitfähigkeits-Ruß und/oder Graphit

Formulierungen mit Leitfähigkeits-Ruß, der beispielsweise durch Verbrennen von kohlenstoffreichen Verbindungen, wie insbesondere Acetylen, gewonnen werden kann, werden oft als Antistatika eingesetzt. Durch Dotierung mit Leitfähigkeits-Ruß kann die elektrische Leitfähigkeit deutlich verbessert werden, womit bei Beschichtungen reduzierte Oberflächenwiderstände realisiert werden können, und damit elektrostatische Aufladungen an den Oberflächen deutlich reduziert werden können. Zur Herstellung und weiteren Verwendungsmöglichkeiten von Rußen vgl. beispielsweise Kirk-Othmer, loc.cit., Vol. 4, Seiten 631 bis 666, J. Wiley, 1978. Der niedrige Oberflächenwiderstand der erfindungsgemäßen Beschichtungen kann auch durch Dispersionen B), die feinverteiltes Graphit enthalten, ermöglicht werden, wobei die Herstellung der Dispersionen B) analog der der Formulierungen enthaltend Leitfähigkeits-Ruß, abläuft. Zur Herstellung von Graphitmodifikationen vgl. beispielsweise Kirk-Othmer, loc.cit., Vol. 4, Seiten 556 bis 631, J. Wiley (1978).
Vorzugsweise wird der Leitfähigkeits-Ruß und/oder das Graphit in der erfindungsgemäßen Dispersionsmischung M) als wäßrige Dispersion B) eingesetzt, wobei die Dispersion mit geeigneten Emulgatoren, wie beispielsweise gesättigte oder ungesättigte Säuren mit C8- bis C20-Alkylresten bzw. deren Salze, hergestellt werden. Bevorzugt werden als Emulgatoren Ammonium- oder Alkalisalze der Öl- oder der Palmitinsäure, Sulfonsuccinate, Alkylsulfonate oder Alkylsulfate.
Die wäßrigen Dispersionen B) können von 1 bis zu 50 Gew.-%, vorzugsweise zwischen 10 und 35 Gew.-% Leitfähigkeits-Ruß und/oder Graphit enthalten. Bei der Herstellung der Dispersion muß darauf geachtet werden, daß die als Agglomerate vorliegenden Ruß- und/oder Graphitpartikel beim Dispergieren zu möglichst kleinen Teilchen einheitlicher Größe aufgebrochen werden (vgl. hierzu EP-A 248 602 = US-Patent 4 888 134). Die Herstellung der Dispersionen B) erfolgt vorzugsweise mit schnellrührenden Mischeinrichtungen, wie beispielsweise Ultra-Turrax-Rührern, wobei die Emulgatoren als wäßrige Lösung zugegeben werden. Im allgemeinen liegt der Anteil der Dispersion B) bei 10 bis 50 Gew.-Teilen, vorzugsweise bei 15 bis 30 Gew.-Teilen bezogen auf 100 Gew.-Teile Dispersion A). Bezogen auf 100 Gew.-Teile der Latexteilchen der Dispersion A) sind damit zwischen 1 und 35 Gew.-Teile, vorzugsweise zwischen 1,5 und 15 Gew.-Teile Leitfähigkeits-Ruß und/oder Graphit in den aus den Dispersionsmischungen M) hergestellten Beschichtungen anwesend.
Bevorzugt werden die Teilchengrößen in den Dispersionen des Leitfähigkeits-Rußes und/oder des Graphits möglichst klein gewählt, wobei bei kleineren Teilchen eine höhere Wirksamkeit, d.h. eine deutlichere Reduktion des Oberflächenwiderstands gefunden wird. Der Anteil des Leitfähigkeits-Ruß und/oder des Graphits in der Dispersionsmischung M) bzw. in der daraus gebildeten Beschichtung muß so hoch sein, daß der Oberflächenwiderstand der Beschichtung weniger als 10⁷ Ohm nach DIN VDE 0303, Teil 5 beträgt.

### Das Verdickungsmittel C

Das Verdickungsmittel C) geht hervor aus einer wäßrigen, alkalisch verdickbaren Dispersion eines Copolymerisats PC) mit einem Feststoffgehalt von 1 bis zu 60 Gew.-%. PC) ist aufgebaut aus den Monomereinheiten pc1): 9,9 bis 79,9 Gew.-% eines Alkylacrylats und/oder eines Alkylmethacrylats mit 1 bis 8 Kohlenstoffatomen im Alkylrest, wie beispielsweise Methyl(meth)acrylat, Ethyl(meth)acrylat, Propyl(meth)acrylat, Butyl(meth)acrylat, Hexyl(meth)-acrylat, Octyl(meth)acrylat oder 2-Ethylhexyl(meth)acrylat;
pc2): 10 bis 90 Gew.-% Acrylsäure und/oder Methacrylsäure, sowie pc3): 0,1 bis 10 Gew.-% eines Acrylsäure- und/oder Methacrylsäureesters der allgemeinen Formel I: 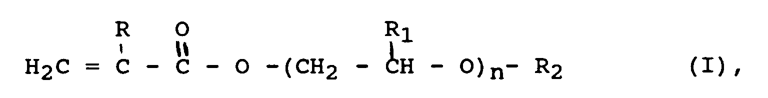
worin
- R und R₁: für Wasserstoff oder Methyl,
- R₂: für C8- bis C20-Alkylreste oder für Aryl- bzw. Aralkylreste mit 6 bis 30 C-Atomen, wobei die Alkylreste auch perfluoriert oder teilweise fluoriert sein können, sowie
- n: für eine ganze Zahl zwischen 1 und 50
stehen, wobei sich die Comonomeren pc1), pc2) und pc3) zu 100 Gew.-% ergänzen.
Vorzugsweise steht R₁ für Wasserstoff und n für eine ganze Zahl zwischen 5 und 40. Die Reste R₂ können auch Gemische von Alkylresten unterschiedlicher Länge sein, wie sie beispielsweise bei der Alkoxylierung von Fettalkohol-Gemischen erhalten werden. Beispielhaft seien genannt:
(Meth)acrylsäureester eines ethoxylierten C16- bis C18-Fettalkoholgemischs mit einem mittleren Ethoxylierungsgrad von 11, (Meth)acrylsäureester von 5-tert-Octylphenoxy-polyethoxyethanol mit einem mittleren Ethoxylierungsgrad von 9 bis 10, sowie vorzugsweise (Meth)acrylsäureester von ethoxyliertem Tridecylalkohol mit einem mittleren Ethoxylierungsgrad von 20 oder (Meth)acrylsäureester eines ethoxylierten C12- bis C14-Fettalkoholgemisches mit einem mittleren Ethoxylierungsgrad von 20 bis 40.
Die Herstellung der Copolymerisate PC) kann nach den üblichen Verfahren durch radikalische Polymerisation der Monomeren in Substanz, in Lösung oder in Emulsion durchgeführt werden (vgl. beispielsweise H. Rauch-Puntigam, Th. Völker, Acryl- und Methacrylverbindungen, Springer-Verlag, Berlin, 1967, insbesondere Seiten 203, 207, 230 bis 233, 238, 327).
Bevorzugt ist die Herstellung der Copolymerisate PC durch Emulsionspolymerisation, vorteilhaft mit Feststoffgehalten zwischen 25 und 60 Gew.-%, wobei übliche, insbesondere anionische Emulgatoren, wie beispielsweise Natriumlaurylsulfat oder sulfatierte Alkylphenoloxethylate verwendet werden. Die Polymerisation wird mit wasserlöslichen Polymerisationsinitiatoren, wie beispielsweise Ammoniumperoxodisulfat oder wasserlöslichen Redoxsystemen, die in Mengen von etwa 0,02 bis 2 Gew.-% bezogen auf die Monomeren anwesend sein können, gestartet und bei Temperaturen im Bereich von etwa 30 bis 100 Grad C durchgeführt. Durch die Mitverwendung von Molekulargewichtsreglern, beispielsweise ein- oder mehrfunktionellen Mercaptanen, wie z.B. 2-Ethylhexylthioglycolat, n-Butylmercaptan, t-Dodecylmercaptan oder Pentaerythrittetrathioglycolat, lassen sich für die Copolymerisate PC) solche Molekulargewichte einstellen, die eine gezielte Einstellung der rheologischen Eigenschaften des Verdickungsmittels C) erlauben.

Die Comonomeranteile pc2) im Copolymerisat PC) sind vorzugsweise in Anteilen von 20 bis 80 Gew.-% bezogen auf die gesamten Monomeren anwesend, wobei die Comonomerenanteile pc2) als solche einpolymerisiert werden können (vgl. hierzu beispielsweise EP-A 398 151) oder in einer bevorzugten Ausführungsform durch alkalische Hydrolyse zumindest eines Teils der Anteile der Alkylacrylate der Comonomeren pc1) zu Säureeinheiten bzw. zu Säuresalzeinheiten im Copolymerisat PC) polymeranalog erzeugt werden (vgl. EP-A 475 076). Vorzugsweise liegt der Anteil der Alkylacrylate am Comonomeren pc1) bei über 50 Mol.-% bezogen auf pc1). Die Dispersion C) wird unmittelbar vor der Hydrolyse auf einen Feststoffgehalt von etwa 8 bis 13 Gew.-% verdünnt. Durch Zusatz von Natron- oder Kalilauge unter Rühren wird die Hydrolyse bei Raumtemperatur in Gang gesetzt. Es ist dabei nicht zweckmäßig, mehr als die zur vollständigen Hydrolyse erforderliche Alkalimenge zu verwenden, sondern vorzugsweise eine nicht zur vollständigen Verseifung ausreichende Menge, beispielsweise 50 bis 80 Mol.-%, insbesondere 65 bis 70 Mol.-%, bezogen auf die Säure- und Acrylestereinheiten des Polymerisats PC).
Die Hydrolyse läuft unter gelinder Selbsterwärmung ab und ist in der Regel nach 16 bis 24 Stunden im wesentlichen abgeschlossen. Die entstandene Polymerlösung ist schwach trüb und hat in der Regel bei einem Feststoffgehalt von 10 Gew.-% eine Brookfield-Viskosität im Bereich zwischen 2 000 und 100 000 mPa·s (Spindel IV, 6 Upm, 20 Grad C), die sich auch bei längerer Lagerung nicht verändert. Der pH-Wert liegt nach Abschluß der Teilverseifung in der Regel bei 10 bis 14.

In den Copolymerisaten PC) werden die Comonomeranteile pc2) gleichermaßen mit Alkalilauge teilweise oder vollständig neutralisiert und leisten einen ihrem Anteil an Copolymerisat PC) entsprechenden Beitrag zur Viskosität der Verdickerlösung beziehungsweise zur Verdickung der erfindungsgemäßen Dispersionsmischungen M).

### Die Füllstoffe D)

Die Füllstoffe D), die sowohl organische wie auch anorganische Verbindungen sein können, werden in bekannter Weise in das Gemisch AB) aus wäßriger Dispersion A) und wäßriger Dispersion B), enthaltend Leitfähigkeits-Ruß und/oder Graphit, eingearbeitet. Füllstoffe D) sind beispielsweise Kalk, Tone, Talkum, Dolomit, Baryte, Aluminiumtrihydrat, Aluminiumoxide, Silikate, Siliciumdioxid, Titandioxid, Metalle oder Metallegierungen, synthetische Materialien wie Keramiken, Glasmehl, Porzellan, Schlacke, Quarze, Kaolin, Glimmer, Feldspat, Apatit, anorganische und organische Farbpigmente, bevorzugt Kreide, sowie Gemische der vorstehend genannten Komponenten. Die Füllstoffe D) werden im allgemeinen in Anteilen von 5 bis 500 Gew.-Teilen, vorzugsweise in 20 bis 400 Gew.-Teilen, bezogen auf 100 Gew.-Teile der wäßrigen Dispersion A), zusammen mit der wäßrigen Dispersion B), oder wie oben beschrieben, in ein Gemisch AB) aus wäßriger Dispersion A) und wäßriger Dispersion B) eingetragen, wobei vorzugsweise schnellrührende Mischeinrichtungen verwendet werden.

### Die Dispersionsmischungen M) und deren Anwendung

Zur Herstellung der bei der Beschichtung verwendeten Dispersionsmischungen M) werden die gegebenenfalls Füllstoff D) enthaltenden Dispersionsmischungen AB) aus wäßriger Dispersion A) und wäßriger Dispersion B) mit dem Verdickungsmittel C) versetzt. Die Anteile an C) betragen 0,1 bis 50 Gew.-Teile, vorzugsweise 1 bis 30 Gew.-Teile bezogen auf 100 Gew.-Teile der wäßrigen Dispersion A). Die (Teil)neutralisation der im Copolymerisat PC) eingebauten Säuregruppen (Comonomere pc2) kann vor und nach der Zugabe des Verdickungsmittels zur Dispersionsmischung AB) erfolgen.
Die Herstellung der Dispersionsmischungen M) erfolgt wiederum vorzugsweise mit schnellrührenden Mischaggregaten, wie beispielsweise Ultra-Turrax-Rührern.
Überraschenderweise beeinträchtigt die Zugabe des Verdickungsmittels C) nicht die Beständigkeit der dispergierten Teilchen aus Leitfähigkeits-Ruß und/oder Graphit gegen Agglomeration.
Die Dispersionsmischungen M) werden in an sich bekannter Art und Weise, wie beispielsweise durch Aufstreichen oder Aufrakeln auf die Oberflächen, insbesondere von strukturierten Materialien aufgebracht und durch Trocknen teilweise oder vollständig vom Wasser befreit. Die Beschichtungen weisen eine gute Haftung, beispielsweise auf Holz, Mauerwerk, Fasern, Geweben sowie geprägten Materialien auf, wobei der Oberflächenwiderstand deutlich um einige Zehnerpotenzen auf einen Wert unter 10⁷ Ohm (bestimmt nach DIN VDE 0303, Teil 5)reduziert wird. Somit können elektrostatische Aufladungen auf solchen Oberflächen weitestgehend vermieden werden. Dies ist beispielsweise bei der antistatischen Ausrüstung von Teppichen, Gehäusen elektronischer Geräte oder Gegenständen in explosionsgefährdeter Umgebung von hoher Bedeutung.

### Die folgenden Beispiele sollen die Erfindung erläutern:

### Meßmethoden:

1) Der Oberflächenwiderstand OW der Beschichtungen wird nach DIN VDE 0303, Teil 5, an einer beschichteten Glasplatte bestimmt, wobei die Schichtdicke etwa 100 bis 200 µm beträgt.
2) Die Viskositäten der Verdickungsmittel C) und der Dispersionsmischungen M) wurden per Brookfield-Viskosimeter bestimmt (Spindel IV, 6 Upm, 20 Grad C).
3) Die mittleren Teilchengrößen der Latexteilchen werden mit der Methode der Photonenkorrelations-Spektroskopie im ® Nanosizer bestimmt, wobei unter "Teilchengröße" der Gewichtsmittelwert des Teilchendurchmessers verstanden wird. Die Uneinheitlichkeit n der vorzugweise engen Teilchengrößenverteilung soll unter 5, bevorzugt unter 2 liegen (Zur Photonenkorrelations-spektroskopie vgl. beispielsweise J. Brandrup und E.H. Immergut, Polymer Handbook, 3rd. Ed. Kap. VII, Seiten 485ff, J. Wiley, 1989).

### BEISPIELE

### Beispiel 1:

### Herstellung des Verdickungsmittels C1)

### 1.1. Herstellung der Dispersion

In einem 21-Reaktionsgefäß, ausgerüstet mit Rückflußkühler, Rührwerk und Zulaufgefäß, werden 0,216 g Ammoniumperoxodisulfat und 0,09 g eines mit der 7-fachen Molmenge Ethylenoxid umgesetzten, anschließend sulfatierten und mit Natronlauge neutralisierten Triisobutylphenols als Emulgator E in 360 g entsalztem Wasser bei 20 Grad C gelöst. Die Lösung wird auf 80 Grad C erhitzt.
Unter Rühren wird eine Emulsion aus:
774,0 g Methylacrylat
85,5 g Methylmethacrylat
4,5 g Methacrylsäureester eines ethoxylierten C12-bis C14-Fettalkoholgemisches, mittlerer Ethoxylierungsgrad 20,
36,0 g Acrylsäure
14,0 g des oben genannten Emulgators E,
und 555,0 g entsalztem Wasser
innerhalb von 4 Stunden gleichmäßig zudosiert.
Anschließend wird noch eine Stunde bei 80 Grad C gerührt und auf Raumtemperatur abgekühlt, wobei bei einer Temperatur von 70 Grad C 0,9 g 1,4-Diisopropylbenzolmonohydroperoxid und 0,7 g Natriumhydroxymethylsulfinat als Redox-Initiator für die Polymerisation der Restmonomeren zugegeben werden.
Nach der Abkühlung wird durchfiltriert.

Der pH-Wert der 50 %igen Dispersion beträgt 2,4, der mittlere Teilchendurchmesser der Latexteilchen 214 nm.

### 1.2. Verseifung der Dispersion gemäß 1.1.:

1,7 kg der Dispersion werden unter Rühren mit 7,74 kg Leitungswasser verdünnt. Innerhalb von 5 Minuten werden 0,56 kg 50 %ige Natronlauge eingerührt. Zur homogenen Verteilung wird noch 30 Minuten nachgerührt und der Ansatz dann bis zum nächsten Tag stehengelassen. Es werden eine Viskosität von 51 000 mPa s, ein pH-Wert von 13,5 und ein Feststoffgehalt von 9,7 Gew.-% bestimmt.

### Beispiele 2 bis 4

### Herstellung der Verdickungsmittel C2) bis C4)

Die Dispersionen werden gemäß Beispiel 1 polymerisiert, wobei die zudosierten Emulsionen folgende Zusammensetzungen aufweisen:

### Beispiel 2 (Dispersion für Verdickungsmittel C2):

### Emulsion:

774,0 g Methylacrylat
85,5 g Methylmethacrylat
4,5 g Methacrylsäureester eines ethoxylierten Tridecylalkohols, mittlerer Ethoxylierungsgrad 40,
36,0 g Acrylsäure
14,0 g Emulgator E
und 555,0 g entsalztes Wasser.

Der pH-Wert der 50 %igen Dispersion beträgt 2,4, der mittlere Teilchendurchmesser der Latexteilchen 238 nm.

### Beispiel 3 (Dispersion für Verdickungsmittel C3)

### Emulsion:

774,0 g Methylacrylat
76,5 g Methylmethacrylat
13,5 g Methacrylsäureester eines ethoxylierten C12-bis C14-Fettalkoholgemisches, mittlerer Ethoxylierungsgrad 20,
36,0 g Acrylsäure,
14,0 g Emulgator E,
0,9 g Ethylhexylthioglycolat als Molekulargewichtsregler
und 555,0 g entsalztes Wasser.

Der pH-Wert der 50 %igen Dispersion beträgt 2,4, der mittlere Teilchendurchmesser der Latexteilchen 248 nm.

### Beispiel 4 (Dispersion für Verdickungsmittel C4)

### Emulsion:

774,0 g Methylacrylat
76,5 g Methylmethacrylat
13,5 g Methacrylsäureester eines ethoxylierten Tridecylalkohols, mittlerer Ethoxylierungsgrad 40,
36,0 g Acrylsäure
14,0 g Emulgator E
0,9 g Ethylhexylthioglycolat
und 555,0 g entsalztes Wasser.

Der pH-Wert der 50 %igen Dispersion beträgt 2,4, der mittlere Teilchendurchmesser der Latexteilchen 218 nm.

Die Herstellung der Verdickungsmittel C2 bis C4 durch Verseifung der o.a. Dispersionen wird gemäß Beispiel 1.2. durchgeführt.

### Die Verdickungsmittel weisen folgende Eigenschaften auf:

| Verdickungsmittel | Feststoffgehalt (Gew.-%) | pH-Wert | Viskosität (mPa·s) |
|---|---|---|---|
| C2 | 9,6 | 12,9 | 38 000 |
| C3 | 9,4 | 13,3 | 5 600 |
| C4 | 9,4 | 13,3 | 2 200 |

### Beispiel 5:

### Herstellung der Dispersionsmischung M1) enthaltend Verdickungsmittel C1) und Bestimmung des Oberflächenwiderstands an einem aufgerakelten Film F1:

194,5 Gew.-Teile einer 50 %igen Styrol-Butadien-Kunststoffdispersion A) (DOW-Latex ® RL 952 der Fa. Revatex) werden zunächst mit 141,2 Gew.-Teilen Leitungswasser verdünnt. Hiernach werden unter Rühren 59,6 Gew.-Teile Graphitdispersion B) (Noir ® 132 der Fa. Revatex) und 596,0 Gew.-Teile Kreide der Fa. Nordkreide als Füllstoff D) in die Vorlage eingearbeitet.
Durch Einrühren von 7,8 Gew.-Teilen des gemäß Beispiel 1.2 verseiften Verdickungsmittels C1) wird die Viskosität der Dispersionsmischung M1) auf ca. 7 500 mPa·s gesteigert. Die Dispersionsmischung M1) wird in einer Naßfilmdicke von 200 um Dicke auf eine Glasplatte aufgerakelt und bei Raumtemperatur zu einem Film F1 von ca. 130 µm Dicke eingetrocknet. Der Oberflächenwiderstand am Film F1 beträgt 6 x 10⁴ Ohm.

### Beispiele 6 bis 8

Die Herstellung der Dispersionsmischungen M2) bis M4) enthaltend Verdickungsmittel C2) bis C4) sowie die Bestimmung der Oberflächenwiderstände an den aufgerakelten Filmen F2) bis F4) erfolgen gemäß Beispiel 5, wobei die Dispersionsmischungen M2) bis M4) dieselben Anteile an Komponenten A), B), C) und D) enthalten.
Es resultieren folgende Oberflächenwiderstände:

| Dispersionsmischung | Verdickungsmittel | | Viskosität der Dispersionsmischung (mPa s) | Film | Oberflächen-Widerstand (Ohm) |
|---|---|---|---|---|---|
| | | Anteil (Gew.-Teile) | | | |
| M2 | C2 | 8,9 | 7 200 | F2 | 2 × 10⁶ |
| M3 | C3 | 8,1 | 9 800 | F3 | 3 × 10⁴ |
| M4 | C4 | 8,0 | 7 200 | F4 | 4 × 10⁴ |

### Beispiel 9 (Vergleichsbeispiel)

### 9.1. Herstellung eines Verdickungsmittels C'1) ohne Comonomerkomponente pc3) gemäß Beispiel 1:

Die Dispersion wird gemäß Beispiel 1.1 polymerisiert, wobei die zudosierte Emulsion folgende Zusammensetzung aufweist:

### Emulsion:

774,0 g Methacrylat
90,0 g Methylmethacrylat
36,0 g Acrylsäure
14,0 g Emulgator E
und 555,0 g entsalztes Wasser
Die Verseifung der so erhaltenen Dispersion wird gemäß Beispiel 1.2 durchgeführt, wobei das Verdickungsmittel C'1) mit einem Feststoffgehalt von 9,5 Gew.-%, einem pH-Wert von 12,5 und einer Viskosität von 42 000 mPa s resultiert.

### 9.2.

Die Herstellung der Dispersionsmischung M'1) enthaltend Verdickungsmittel C'1) und Bestimmung des Oberflächenwiderstands an einem aufgerakelten Film F'1 erfolgt gemäß Beispiel 5, wobei die Dispersionsmischung M'1) dieselben Anteile an Komponenten A, B) und D) enthält.

Der Anteil an Verdickungsmittel C'1) beträgt 11,0 Gew.-Teile, der Anteil an Leitungswasser 138,0 Gew.-Teile und die Viskosität der Dispersionsmischung M'1) 9 200 mPa·s. Der Oberflächenwiderstand am Film F'1 beträgt 4 x 10⁹ Ohm.

## Patentansprüche

1. Wäßrige Dispersionsmischungen M) für Oberflächenbeschichtungen bestehend aus 100 Gew.-Teilen einer wäßrigen Kunststoff-Dispersion A) mit einem Feststoffgehalt von bis zu 60 Gew.-%, deren Latexteilchen eine dynamische Glasübergangstemperatur von weniger als 70 Grad C aufweisen, aus 10 bis 50 Gew.-Teilen einer wäßrigen Dispersion B), enthaltend bis zu 50 Gew.-% Leitfähigkeits-Ruß und/oder Graphit, aus 0,1 bis 50 Gew.-Teilen eines Verdickungsmittels C auf Poly(meth)acrylat-Basis sowie aus 0 bis 500 Gew.-Teilen an Füllstoffen D),
dadurch gekennzeichnet,
daß das Verdickungsmittel C) aus einer alkalisch verdickbaren wäßrigen Dispersion eines Copolymerisats PC) mit einem Feststoffgehalt von bis zu 60 Gew.-% besteht, wobei PC) aufgebaut ist aus:
pc1) 9,9 bis 79,9 Gew.-% eines Alkylacrylats und/oder eines Alkylmethacrylats mit 1 bis 8 Kohlenstoffatomen im Alkylrest,
pc2) 10 bis 90 Gew.-% Acrylsäure und/oder Methacrylsäure sowie
pc3) 0,1 bis 10 Gew.-% eines Acrylsäure- und/oder Methacrylsäureesters der allgemeinen Formel I: 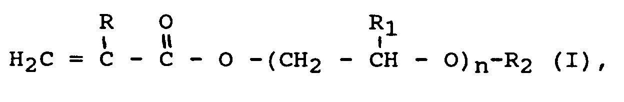 worin
R und R₁ für Wasserstoff oder Methyl,
R₂ für C8- bis C20-Alkylreste oder für Aryl- bzw. für Aralkylreste mit 6 bis 30 C-Atomen, wobei die Alkylreste auch perfluoriert oder teilweise fluoriert sein können,
sowie n für eine ganze Zahl zwischen 1 und 50
stehen, wobei sich die Comonomeren pc1), pc2), und pc3) zu 100 Gew.-% ergänzen,
und daß die Oberflächenbeschichtungen einen Oberflächenwiderstand von weniger als 10⁷ Ohm, bestimmt nach DIN VDE 0303 (Teil 5), aufweisen.

2. Dispersionsmischungen M) für Oberflächenbeschichtungen gemäß Anspruch 1, dadurch gekennzeichnet, daß die Latexteilchen der wäßrigen Dispersion A) eine dynamische Glasübergangstemperatur von weniger als 40 Grad C aufweisen.

3. Dispersionsmischungen M) für Oberflächenbeschichtungen gemäß den Ansprüchen 1 und 2, dadurch gekennzeichnet, daß die Säuregruppen der Comonomereinheiten pc2) im Copolymerisat PC) des Verdickungsmittels C) teilweise oder vollständig durch alkalische Hydrolyse aus den Comonomereinheiten pc1) im Copolymerisat PC) erzeugt werden.

4. Dispersionsmischungen M) für Oberflächenbeschichtungen gemäß den Ansprüchen 1 bis 3, dadurch gekennzeichnet, daß im Comonomeren pc3) des Copolymerisats PC) R₁ für Wasserstoff und n für eine ganze Zahl zwischen 5 und 40 steht.

5. Dispersionsmischungen M) für Oberflächenbeschichtungen gemäß den Ansprüchen 1 bis 4, dadurch gekennzeichnet, daß der Anteil der Alkylacrylate am Comonomeren pc1) bei über 50 Mol.-% bezogen auf pc1) liegt.

6. Dispersionsmischungen M) für Oberflächenbeschichtungen gemäß den Ansprüchen 1 bis 5, dadurch gekennzeichnet, daß der Füllstoff D ein anorganisches Material ist.

7. Dispersionsmischungen M) für Oberflächenbeschichtungen gemäß den Ansprüchen 1 bis 6, dadurch gekennzeichnet, daß das Verdickungsmittel C) einer Vormischung AB), bestehend aus den wäßrigen Dispersionen A) und B) sowie aus dem Füllstoff D), zugegeben wird.

8. Verwendung der Dispersionsmischungen M) für Oberflächenbeschichtungen gemäß den Ansprüchen 1 bis 7 zur Beschichtung von strukturierten Oberflächen mit verringertem Oberflächenwiderstand.
